# EUROPÄISCHE PATENTSCHRIFT

(11) **EP 2 785 926 B1**
(45) Veröffentlichungstag und Bekanntmachung des Hinweises auf die Patenterteilung: **06.09.2017**
(21) Anmeldenummer: 12791504.9
(22) Anmeldetag: 29.11.2012
(51) Int. Cl.: E03F 7/04, F16K 15/14

(54) **RÜCKSTAUSICHERUNG**
BACK PRESSURE SAFEGUARD
PROTECTION CONTRE LE REFLUX

(30) Priorität: 01.12.2011 CH 19112011
(43) Veröffentlichungstag der Anmeldung: 08.10.2014
(73) Patentinhaber: Lasso Technik AG, 4059 Basel (CH)
(72) Erfinder: ROHRER, Daniel, CH-4059 Basel (CH); WASER, Roger, CH-6373 Ennetbürgen (CH)
(74) Vertreter: Braun, André jr.
(86) Internationale Anmeldenummer: PCT/EP2012/073946
(87) Internationale Veröffentlichungsnummer: WO 2013/079587

(56) Entgegenhaltungen:
- US-A- 4 098 287
- US-A- 4 993 452
- US-A- 5 769 125

## Beschreibung

Die Erfindung betrifft eine Rückstausicherung gemäss dem Oberbegriff des unabhängigen Anspruchs 1.

Rückstausicherungen kommen zum Einsatz, wo in Rohrleitungen eine unerwünschte Umkehr der Fliessrichtung unterbunden werden soll. Ein typisches Anwendungsgebiet ist die Gebäudeentwässerung, wenn Ablaufstellen im Gebäude unterhalb der Rückstauebene liegen. Wenn ausserhalb des Gebäudes beispielsweise bei Hochwasser der Wasserspiegel im Entwässerungssystem steigt, würde ohne Rückstausicherung Wasser in das Untergeschoss des Gebäudes eindringen und im schlimmsten Fall bis zur Rückstauebene steigen, die fallweise sogar oberhalb des Bodenniveaus des Erdgeschosses liegen kann. Es gibt auch eine ganze Reihe von anderen Einsatzgebieten, die dem Fachmann bekannt sind.

Bei Rückstausicherungen unterscheidet man zwischen aktiven Systemen, bei denen eine Leitung durch eine angetriebene Verschliesseinrichtung geöffnet oder geschlossen wird, und passiven Systemen, bei denen die Öffnung bzw. Schliessung der Leitung allein durch die Druckdifferenz vor und hinter der Sicherung erfolgt. Gegenstand der vorliegenden Anmeldung ist eine passive Rückstausicherung.

Für den Zweck dieser Anmeldung bezeichnet der Begriff "innen" die Seite der Rückstausicherung, aus welcher der abzuführende Flüssigkeitsstrom ankommt, und der Begriff "aussen" die Seite, von der her ein möglicher Rückstau erfolgt und den die Sicherung absperren muss.

Die früher weitest verbreitete und auch heute noch verwendete Form der Rückstausicherung für Rohre ist eine Klappe, die mittels eines Scharniers so am Rohr befestigt ist, dass sie nach aussen öffnen kann, um den Ablauf von innen nach aussen zuzulassen, und bei Rückstau gegen das Rohrende oder einen im Rohr befindlichen Flansch gepresst wird und somit das Rohr verschliesst. Diese Art der Rückstausicherungen weist eine ganze Reihe von Nachteilen auf, so dass sie zunehmend durch eine andere Form abgelöst werden, die aus einem im Rohr oder am Rohrende angebrachten, nur einseitig durchströmbaren Elastomer-Element besteht.

Eine typische solche Vorrichtung ist beispielsweise in US-5769125 beschrieben und wird unter den Bezeichnungen Tide-flex^{R} und CheckMate^{™} von der Firma Red Valve Company, Inc. hergestellt und vertrieben. Diese Rückstausicherung besteht aus einem Elastomer-Element, das innen die Form einer zylindrischen Manschette besitzt, die nach aussen in eine als Schnabel (bill) bezeichnete Form ausläuft, bei der die obere Hälfte der Manschette gegen die untere geklappt ist. Die zylindrische Manschette wird passgenau für das zu sichernde Rohr gefertigt und auf unterschiedliche Weise am oder im Rohr befestigt. Ohne Rückstaudruck aussen wird der Schnabel durch geringen Druck, beispielsweise des Abwassers, von innen geöffnet, so dass das Abwasser abfliessen kann. Ein Rückstaudruck verschliesst den Schnabel und verhindert einen Rückfluss.

Obwohl diese Rückstausicherung einen grossen Fortschritt gegenüber den Klappen darstellt, weist sie einige Nachteile auf. Ein Nachteil besteht darin, dass entweder für jede Anwendung eine passgenaue Herstellung erforderlich ist oder aber, falls eine Dimension der Rückstausicherung für mehrere Rohrquerschnitte eingesetzt werden soll, die Differenzen zwischen Aussendurchmesser der Rückstausicherung mit Dichtungsmaterial ausgefüllt werden müssen. Auf jeden Fall geht ein erheblicher Teil des Rohrquerschnitts mit der Folge eines höheren Druckverlusts verloren. Ein weiterer Nachteil besteht darin, dass die Befestigung bei einem Einsatz im Inneren eines Rohrs relativ kompliziert ist. Schliesslich besteht ein weiterer Nachteil darin, dass die zur Vermeidung des Umklappens des Schnabels nach innen erforderliche konstruktive Ausgestaltung aufwändig ist.

Aus WO-01/50048 ist eine Rückstausicherung mit einem Elastomer-Element gemäss dem Oberbegriff des Anspruchs 1 bekannt, wobei der Verschluss aussen nicht durch einen Schnabel gebildet wird, sondern durch eine sich an die Rohrwand anlegende Kante bzw. Lippe. Bei dieser Lösung besteht die Gefahr des Umstülpens nach innen weniger als bei der schnabelförmigen Ausbildung, so dass das Elastomer-Element einfacher gestaltet werden kann. Allerdings muss auch diese Rückstausicherung passgenau für jeden Rohrdurchmesser gefertigt oder, wie bei der vorstehenden Lösung, mittels Dichtungsmaterial angepasst werden, was ebenfalls zu einem Querschnittsverlust führt.

Der Erfindung liegt die Aufgabe zugrunde, eine passive Rückstausicherung bereitzustellen, welche die Nachteile der bekannten Vorrichtungen dieser Art nicht aufweist. Insbesondere soll die Rückstausicherung an unterschiedliche Rohrdurchmesser anpassbar und leicht in einem Rohr einbaubar bzw. austauschbar sein.

Erfindungsgemäss wird diese Aufgabe gelöst durch die kennzeichnenden Merkmale des Anspruchs 1. Im Folgenden wird anhand der beiliegenden Zeichnungen ein bevorzugtes Ausführungsbeispiel der Erfindung beschrieben. Es zeigen
- Fig. 1: einen axialen Schnitt durch eine Rückstausicherung
- Fig. 2: eine Draufsicht auf die Klemmvorrichtung zur Befestigung in einem Rohr
- Fig. 3: einen axialen Schnitt durch das Elastomer-Element der Rückstausicherung gemäss Fig. 1

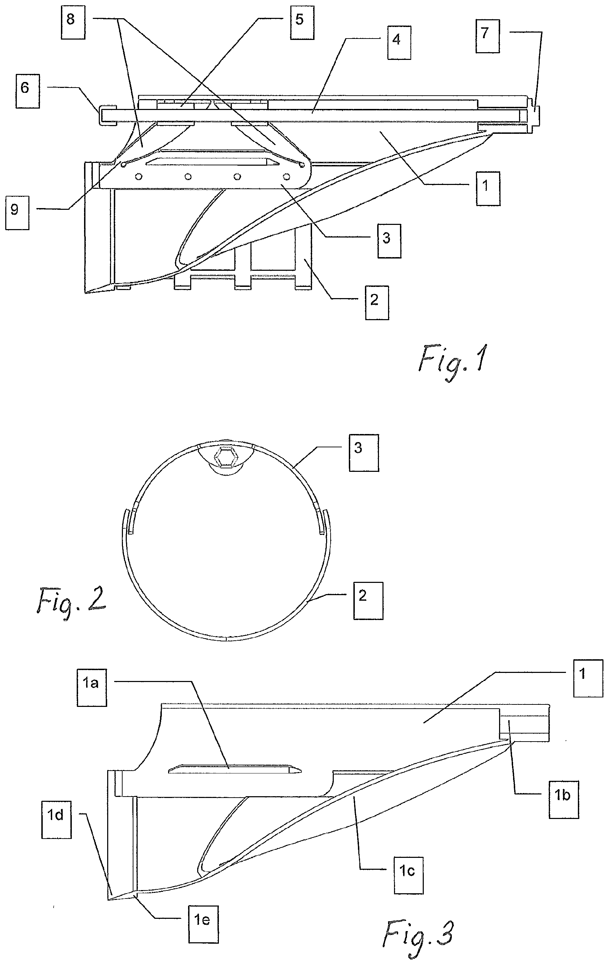

Die in Fig. 1 in einem in der Axialebene geführten Schnitt gezeigte Rückstausicherung besteht aus einem Elastomer-Element 1, im Folgenden auch Membrane genannt, und einer Klemmvorrichtung. Die Rückstauvorrichtung eignet sich zum Einsetzen in das Innere eines Rohrs, wobei die Klemmvorrichtung zur Anpassung an den Innendurchmesser des Rohrs und zum Festklemmen der Rückstausicherung im Rohr dient.

Wie in Fig. 3 gezeigt, besitzt die Membran annähernd die Form einer Spitztüte mit einer in der Zeichnung links befindlichen offenen Seite, welche im eingesetzten Zustand nach aussen gerichtet ist, und einer in der Zeichnung links befindlichen geschlossenen Seite, welche im eingesetzten Zustand nach innen gerichtet ist. Die Membrane besteht zwar aus einem Stück, lässt aber einen oberen Teil und einen unteren Teil erkennen, die unterschiedliche Funktionen erfüllen.

Der obere Teil der Membran hat statische Funktion und dient im Wesentlichen zur Anpassung an den Rohrquerschnitt und zur Befestigung im Rohr mittels der Klemmvorrichtung, durch welche der obere Teil der Membran gegen die Rohrinnenwand gepresst wird. Die Pressung bewirkt ausserdem eine Abdichtung des oberen Bereichs des Rohrs. Diese Abdichtungswirkung wird im Fall eines Rückstaus durch den Staudruck von aussen, der den oberen Teil der Membran nach oben gegen die Rohrwand drückt, verstärkt.

Am oberen Teil der Membran sind Rippen 1a als Anschläge ausgebildet, die verhindern, dass beim Aufspannen bzw. Ausdehnen der Klemmvorrichtung das Membranmaterial von unten nach oben gezogen wird.

Am geschlossenen Ende der Membran geht der obere Teil in ein massives Endstück über, in welchem eine Durchgangsöffnung 1b für die noch zu beschreibende Spannschraube 4 der Klemmvorrichtung ausgebildet ist.

Der untere Teil der Membran hat eine dynamische Funktion, d.h. er vollzieht das Öffnen für den Durchfluss von innen nach aussen und das Schliessen wenn kein Durchfluss erfolgt bzw. wenn ein Rückstau entsteht. Der äussere Rand des unteren Teils ist als Dichtlippe 1d mit einer dünnen Kante ausgebildet. Beim Aufweiten der Membran auf den Rohrquerschnitt mittels der Klemmvorrichtung erhält die auf dem unteren Teil der Klemmvorrichtung lose aufliegende Dichtlippe eine gewisse Vorspannung, was die Dichtwirkung verbessert.

Hinter der Dichtlippe ist eine Schulter 1e ausgebildet, die am Unterteil der noch zu beschreibenden Klemmvorrichtung anliegt und die bei Rückstau auftretenden Kräfte in die Rohrwand leitet und ein Umklappen des unteren Membranteils nach innen bis zu hohen Überbelastungen verhindert.

Der untere Teil der Membran ist mit einer zur Achse hin gerichteten, das Öffnen begünstigenden, vorgeformten Einbuchtung 1c versehen, die ggf. für höhere Rückstaudrücke geeignet verstärkt werden kann.

Wie aus Fig. 2 ersichtlich besteht die Klemmvorrichtung aus einem Oberteil 3 und einem Unterteil 2, die sich in einander gegenüberliegenden Bereichen überlappen. Die Klemmvorrichtung ist mit der Membran in der Weise zusammengefügt, dass sowohl der Oberteil als auch der Unterteil 2 der Klemmvorrichtung 3 jeweils unterhalb der Membran angeordnet sind, die Membran also im Überlappungsbereich zwischen den beiden Teilen der Klemmvorrichtung hindurchgeht und dort mit der Klemmvorrichtung verbunden ist, beispielsweise durch Vernietung, Verschraubung etc.

Der Oberteil 3 der Klemmvorrichtung dient als Spreizteil zum Aufweiten der Rückstausicherung auf den jeweiligen Rohrquerschnitt und besteht im wesentlichen aus den geraden, mit dem Unterteil überlappenden Flachstücken, zwischen deren jeweils gegenüber liegenden Enden sich entsprechend der Krümmung der Rohrwand geformte Bögen 8 erstrecken, die zueinander geneigt sind. An den obersten Punkten der Bögen sind Gewindeblöcke 5 mit Innengewinden angebracht, von denen eines ein Rechts- und das andere ein Linksgewinde ist. Durch die Gewinde erstreckt sich eine Spannschraube, die ebenfalls mit Rechts- bzw. Linksgewinde versehen ist. Die Spannschraube erstreckt sich ausserdem durch die Öffnung 1b der Membran und ist am Ende mit einem Werkzeugansatz, z.B. einem Sechskant 7, versehen. Das andere Ende der Schraube ist ebenfalls mit einem Werkzeugansatz 6 versehen. Durch Drehen der Schraube werden die Gewindeblöcke und damit die Bögen 8 einander genähert, wodurch der Umfang der Klemmvorrichtung verkleinert wird, oder voneinander entfernt, wodurch der Umfang vergrössert wird. Die Bewegung der Schenkel wird dadurch begünstigt, dass am Übergang von den Flachstücken zu den Schenkeln 8 durch Materialreduktion definierte Drehpunkt 9 ausgebildet sind.

Bei der Aufweitung des Umfangs durch das Auseinanderspreizen der Bögen findet gleichzeitig eine Aufkantung der Bogenkanten statt, wodurch sich die Bogenkanten stärker in das Material der Membran eindrücken und den Presseffekt verstärken.

Der Unterteil 2 der Klemmvorrichtung dient als Abstützung für den Oberteil bzw. Spreizteil und besteht aus einem mit dem Oberteil überlappenden, geraden Flachteil und von diesem ausgehende, etwa der Krümmung der Rohrwand entsprechend gebogene und an der Rohrwand anliegende Bügel, die an ihren Enden miteinander verbunden sind. Die Bügel können beim Auftreten von hohen Rückstaudrücken als zusätzliche Anschläge für die Schulter des unteren Teils der Membran dienen. Zusätzlich können eine weitere Schulter oder Noppen als Anschlag an der Membran angebracht sein.

Zur Montage wird die Rückstausicherung an die vorgesehene Stelle in dem zu sichernden Rohr eingeführt und die Spannschraube soweit angezogen, dass noch eine axiale Bewegung der Rückstausicherung möglich ist. Danach wird die endgültige Positionierung vorgenommen und die Spannschraube mit einem Drehmomentschlüssel angezogen. Das Drehmoment wird so gewählt, dass eine kraftschlüssige Verbindung erreicht wird, die ein Vielfaches des zu erwartenden Rückstaudrucks aufnehmen kann.

Die aufspreizbare Klemmvorrichtung kann auch nicht erfindungsgemäss ohne die Membran zur Befestigung von Einsatzstücken und dergl. in Rohren verwendet werden. Für eine solche Anwendung sind Oberteil und Unterteil fest miteinander verbunden oder ggf. einstückig hergestellt.

## Patentansprüche

1. Rückstausicherung mit einem in einem zu sichernden Rohr anzuordnenden trichterförmigen, eine offene, dem Querschnitt des zu sichernden Rohrs entsprechende Seite und eine geschlossene Seite aufweisenden Elastomer-Element (1), dessen offene Seite durch Abheben seiner Kante von der Rohrwand den Durchfluss zulässt und bei Rückstau mit seiner Kante an der Rohrwand dichtend anliegt, und mit Mitteln zum Verbinden des Elastomer-Elements mit der Rohrwand, **dadurch gekennzeichnet, dass** die Mittel zum Verbinden des Elastomer-Elements mit der Rohrwand aus einer mit dem Elastomer-Element verbundenen Klemmvorrichtung (2, 3) bestehen, die ihrerseits aus einem innerhalb der offenen Seite des Elastomer-Elements angeordneten, einen Teil des Elastomer-Elements (1) an die Rohrwand pressenden und die offene Seite des Elastomer-Elements (1) auf den Rohrdurchmesser aufweitenden Spreizteil (3) und einem ausserhalb der offene Seite des Elastomer-elements angeordneten, den Spreizteil gegen die Rohrwand abstützenden Stützteil (2) besteht.

2. Rückstausicherung nach Anspruch 1, **dadurch gekennzeichnet, dass** an der offenen Seite des Elastomer-Elements eine Dichtlippe (1d) ausgebildet ist.

3. Rückstausicherung nach Anspruch 1, **dadurch gekennzeichnet, dass** hinter der Dichtlippe eine Schulter als Anschlag (1e) an der Klemmvorrichtung ausgebildet ist.

4. Rückstausicherung nach Anspruch 1, **dadurch gekennzeichnet, dass** der Spreizteil aus schräg zueinander geneigten Bögen (8) besteht, die mit Mitteln zu Veränderung ihres Abstandes versehen sind und dadurch eine Umfangsvergrösserung bzw. -verkleinerung bewirken.

5. Rückstausicherung nach Anspruch 4, **dadurch gekennzeichnet, dass** die Mittel zur Abstandsveränderung aus Gewindeblöcken (5) und einer durchgehenden Spannschraube (4) bestehen, die mit Rechts- und Linksgewinde zu- bzw. gegeneinander bewegt werden.

## Claims

1. A backpressure safeguard with a funnel-shaped elastomeric element (1) to be positioned in a pipe to be fastened, comprising an open side, corresponding to the cross section of the pipe to be fastened and a closed side, the open side of said element allowing a flow by the raising of its edge from the pipe wall and, in case of backpressure, tightly resting with its edge on the pipe wall, and with means for connecting the elastomeric element to the pipe wall, **characterized in that** the means for connecting the elastomeric element to the pipe wall are composed of a clamping device (2, 3), which is connected to the elastomeric element, which in turn is composed of an expansion part (3) which presses a portion of the elastomeric element (1) against the pipe wall and which expands the open side of the elastomeric element (1) to the pipe diameter and a support part (2), which is positioned outside of the open side of the elastomeric element and which supports the expansion part against the pipe wall.

2. The backpressure safeguard of claim 1, **characterized in that** on the open side of elastomeric element a sealing lip (1d) is formed.

3. The backpressure safeguard of claim 1, **characterized in that** behind the sealing lip a shoulder, as an abutment (1e), is formed on the clamping device.

4. The backpressure safeguard of claim 1, **characterized in that** the expansion part is composed of arcs (8), which are obliquely inclined to each other and which are provided with means for varying their mutual distance and therefore obtaining a circumferential increase or reduction.

5. The backpressure safeguard of claim 4, **characterized in that** the means for changing the distance are made of threaded blocks (5) and a continuous tightening screw (4), which are moved to or away from each other by right-hand and left-hand threads.

## Revendications

1. Protection contre le reflux comprenant un élément d'élastomère (1) en forme d'entonnoir à affecter à un tube à protéger présentant un côté ouvert correspondant à la section transversale du tube à protéger et un côté fermé, dont le côté ouvert permet le passage par retrait de son bord de la paroi du tube et s'applique de manière étanche, lors d'un reflux, par son bord sur la paroi du tube, et des moyens pour lier l'élément d'élastomère à la paroi du tube, **caractérisée en ce que** les moyens de liaison de l'élément d'élastomère avec la paroi du tube sont constitués d'un dispositif de verrouillage (2, 3) lié à l'élément d'élastomère, qui, pour sa part, est constitué d'une partie d'expansion (3) agencée à l'intérieur du côté ouvert de l'élément d'élastomère, pressant une partie de l'élément d'élastomère (1) sur la paroi du tube et élargissant le côté ouvert de l'élément d'élastomère (1) sur le diamètre du tube et une partie d'appui (2) agencée à l'extérieur du côté ouvert de l'élément d'élastomère et appuyant la partie d'expansion contre la paroi du tube.

2. Protection contre le reflux selon la revendication 1, **caractérisée en ce qu'**une lèvre d'étanchéité (1d) est formée sur le côté ouvert de l'élément d'élastomère.

3. Protection contre le reflux selon la revendication 1, **caractérisée en ce qu'**un épaulement est formé comme butée (1e) sur le dispositif de verrouillage derrière la lèvre d'étanchéité.

4. Protection contre le reflux selon la revendication 1, **caractérisée en ce que** la partie d'expansion est constituée de tôles (8) inclinées en biais l'une par rapport à l'autre qui sont pourvues de moyens pour modifier leur distance et forment par suite un élargissement ou une réduction périphérique.

5. Protection contre le reflux selon la revendication 4, **caractérisée en ce que** les moyens de modification de distance sont constitués de blocs filetés (5) et d'une vis de serrage traversante (4), qui sont déplacés l'un vers l'autre ou l'un à l'encontre de l'autre avec des filets à droite et à gauche.
